# EUROPÄISCHE PATENTANMELDUNG

(11) **EP 1 589 260 A2**
(43) Veröffentlichungstag der Anmeldung: **26.10.2005**
(21) Anmeldenummer: 05007729.6
(22) Anmeldetag: 08.04.2005
(51) Int. Cl.: F16H 45/02

(54) **Torsionsschwingungsdämpfer**

(30) Priorität: 21.04.2004 DE 102004019223
(71) Anmelder: ZF FRIEDRICHSHAFEN AG, 88046 Friedrichshafen (DE)
(72) Erfinder: Wack, Erwin, 97464 Niederwerrn (DE); Breier, Horst, 97456 Dittelbrunn (DE)

(57) **Zusammenfassung**

Die umfangsseitigen Begrenzungen (81) jeder Ausnehmung (75) sind entlang je einer ersten Verbindungslinie (VL1) zu einer ersten Drehachse (D1) ausgerichtet, die umfangsseitigen Endwindungen (83) jedes Energiespeichers (73) bei fehlender Relativdrehauslenkung der Übertragungselemente (65,68) dagegen entlang je einer zweiten Verbindungslinie (VL2) zu einer zweiten Drehachse (D2). Die zweite Verbindungslinie (VL2) ist unter einem Anfangsanstellwinkel (α_{anf}) gegenüber der ersten Verbindungslinie (VL1) ausgerichtet. Mit Beginn einer Relativdrehauslenkung der Übertragungselemente (65,68) bis zum Erreichen einer vorbestimmten Grenzrelativdrehauslenkung setzt an der jeweiligen umfangsseitigen Endwindung (83) jedes Energiespeichers (73) eine Änderung des Anfangsanstellwinkels (α) zwischen der zweiten Verbindungslinie (VL2) und der ersten Verbindungslinie (VL1) auf einen Endanstellwinkel (α_{end}) ein. Bei einer über die vorbestimmte Grenzrelativdrehauslenkung hinaus gehenden Relativdrehauslenkung sind die umfangsseitigen Endwindungen (83) jedes Energiespeichers (73) zumindest im Wesentlichen keiner weiteren Änderung des Endanstellwinkels (α) unterworfen.

## Beschreibung

Die Erfindung betrifft einen Torsionsschwingungsdämpfer gemäß dem Oberbegriff des Anspruches 1.

Aus der DE 44 14 519 C2 ist ein Torsionsschwingungsdämpfer mit einem antriebsseitigen Übertragungselement, einem abtriebsseitigen Übertragungselement und wirkungsmäßig zwischen denselben angeordneten Energiespeichern bekannt, wobei dieser Torsionsschwingungsdämpfer dem Kolben einer Überbrückungskupplung einer hydrodynamischen Kopplungsanordnung, wie beispielsweise einem Drehmomentwandler, zugeordnet ist. Der Torsionsschwingungsdämpfer ist hierfür mit seinem antriebsseitigen Übertragungselement drehfest mit dem Kolben der Überbrückungskupplung verbunden, während das abtriebsseitige Übertragungselement an einer mit einer Getriebeeingangswelle drehfesten Hülse befestigt ist.

Die Energiespeicher befinden sich auf einem relativ kleinen Radius um die Drehachse und sind in Ausnehmungen der Übertragungselemente tangential angeordnet. Im Betriebszustand werden insbesondere die umfangsseitig mittleren Windungen der Energiespeicher fliehkraftbedingt stark nach radial außen durchgebogen, wobei diese Durchbiegungen jeweils durch die radiale Außenseite der Ausnehmungen begrenzt wird. Dadurch sind einerseits die Windungen der Energiespeicher vor extremer Biegebelastung geschützt, andererseits aber entsteht bei Relativdrehauslenkung der beiden Übertragungselemente eine Reibwirkung zwischen den Windungen der Energiespeicher und den radialen Außenseiten der Ausnehmungen, wobei diese Reibwirkung mit ansteigender Drehzahl zunimmt. Da im höheren Drehzahlbereich allerdings üblicherweise keine großen Torsionsschwingungen vorliegen, wird durch die vorerwähnte Reibwirkung die Entkopplungsgüte des Torsionsschwingungsdämpfers erheblich verschlechtert.

Der Erfindung liegt die Aufgabe zugrunde, einen Torsionsschwingungsdämpfer so auszubilden, dass eine fliehkraftbedingte Reibwirkung durch Windungen der Energiespeicher an Ausnehmungen von Übertragungselementen soweit als möglich ausgeschlossen ist.

Diese Aufgabe wird erfindungsgemäß durch die in den Kennzeichen der unabhängigen Ansprüche angegebenen Merkmale gelöst.

Von besonderer Bedeutung ist hierbei zum Einen die Ausbildung von in den Übertragungselementen vorgesehenen, zur Aufnahme jeweils eines Energiespeichers dienenden Ausnehmungen mit umfangsseitigen Begrenzungen, die jeweils entlang einer ersten Verbindungslinie VL1 zu einer ersten Drehachse im Wesentlichen auf dieselbe ausgerichtet sind, und zum Anderen umfangsseitige Endwindungen an Energiespeichern, die bei fehlender Relativdrehauslenkung der Übertragungselemente entlang je einer zweiten Verbindungslinie VL2 zu einer zweiten Drehachse im Wesentlichen auf dieselbe ausgerichtet sind. Ist die zweite Verbindungslinie VL2 unter einem Anfangsanstellwinkel α_{anf} gegenüber der ersten Verbindungslinie VL1 ausgerichtet, so setzt mit Beginn einer Relativdrehauslenkung der Übertragungselemente bis zum Erreichen einer vorbestimmten Grenzrelativdrehauslenkung zwischen diesen an der jeweiligen umfangsseitigen Endwindung jedes Energiespeichers eine Änderung eines Anstellwinkels α ein, und zwar ausgehend vom Anfangsanstellwinkel α_{anf} auf einen ebenfalls zwischen der zweiten Verbindungslinie VL2 und der ersten Verbindungslinie VL1 liegenden Endanstellwinkel α_{end}. Erst bei einer über die vorbestimmte Grenzrelativdrehauslenkung hinaus gehenden Relativdrehauslenkung der Übertragungselemente an den umfangsseitigen Endwindungen jedes Energiespeichers wird, zumindest im Wesentlichen, keine Änderung des Anstellwinkels α mehr ausgelöst, der Endanstellwinkels α_{end} bleibt unverändert.

Solange der Anfangsanstellwinkel α_{anf} besteht, kommen die umfangsseitigen Endwindungen der Energiespeicher entweder gemäß einer ersten Ausführung jeweils nur mit dem radial äußeren Bereich der benachbarten umfangsseitigen Begrenzung einer Ausnehmung in Anlage, oder gemäß einer zweiten Ausführung nur mit dem radial inneren Bereich der benachbarten umfangsseitigen Begrenzung. Folglich entfernt sich bei der ersten Ausführung die umfangsseitige Endwindung mit zunehmender Radialerstreckung nach innen immer weiter von der zugeordneten umfangsseitigen Begrenzung, um im Bereich der radialen Innenseite der Ausnehmung einen Maximalabstand zu erreichen, während bei der zweiten Ausführung die umfangsseitig letzte Windung mit zunehmender Radialerstreckung nach außen ihren Abstand von der zugeordneten umfangsseitigen Begrenzung immer weiter vergrößert, bis sie im radialen Außenbereich der Ausnehmung ihren Maximalabstand erreicht.

Bei der ersten Ausführung wird mit Vorzug ein vorgekrümmter Energiespeicher mit einem neutralen Energiespeicherradius (r_{FN}) gewählt, der nur geringfügig größer oder aber im Wesentlichen gleich ist wie der mittlere Radius (rₘ) der Ausnehmung. Bedingt durch die zunächst nur radial außen an den umfangsseitigen Begrenzungen der Ausnehmungen anliegenden umfangsseitigen Endwindungen des Energiespeichers wird bei beginnender Relativdrehauslenkung der Übertragungselemente eine Verformungskraft auf den Energiespeicher in dessen radial äußerem Bereich eingebracht, so dass eine der Fliehkraft entgegen gerichtete, also im Wesentlichen nach radial innen wirkende, Stabilisierungskraft entsteht. Die fliehkraftbedingte Durchbiegung des Energiespeichers wird dadurch erheblich reduziert.

Bei der zweiten Ausführung wird ebenfalls ein vorgekrümmter Energiespeicher genutzt, allerdings mit einem deutlich größeren neutralen Energiespeicherradius (r_{FN}) gegenüber dem mittleren Ausnehmungsradius (rₘ) der Ausnehmung. Eingesetzt in die Ausnehmung, kommt der Energiespeicher mit seinen umfangsseitigen Endwindungen an den umfangsseitigen Begrenzungen der Ausnehmung im Wesentlichen nur im radial inneren Bereich zur Anlage. Bei beginnender Relativdrehauslenkung der Übertragungselemente wird eine Verformungskraft auf den Energiespeicher lediglich in dessen radial innerem Bereich eingebracht, durch welche die Bereitschaft des Energiespeichers, sich entsprechend seiner gegenüber der Ausnehmung geringeren Krümmung auszurichten, unterstützt wird und damit eine der Fliehkraft entgegengerichtete, im Wesentlichen nach radial innen wirkende Stabilisierungskraft entsteht. Auch bei dieser Ausführung wird die fliehkraftbedingte Durchbiegung des Energiespeichers hierdurch reduziert.

Bei beiden zuvor behandelten Ausführungen wirkt sich gleichzeitig ein positiver Effekt im Hinblick auf die Federkennlinie aus:

Durch Anlage lediglich eines Radialabschnittes der umfangsseitig letzten Windung des Energiespeichers beginnt die Verformung des Letztgenannten mit vergleichsweise geringer Federsteifigkeit, die bei zunehmender Relativdrehauslenkung zwischen den Übertragungselementen progressiv anwächst, da sich der Energiespeicher bei zunehmender Relativdrehauslenkung mit einem immer größeren Radialanteil seiner umfangsseitigen Endwindung an der benachbarten umfangsseitigen Begrenzung der Ausnehmung abstützt. Dieser Vorgang ist erst dann abgeschlossen, wenn nach Erreichen der Grenzrelativdrehauslenkung der Endanstellwinkel α_{end} vorliegt, der kleiner als der Anfangsanstellwinkel α_{anf} ist und im Idealfall sogar gleich Null ist. Die umfangsseitige Endwindung des Energiespeichers liegt dann im Wesentlichen vollflächig an der umfangsseitigen Begrenzung der Ausnehmung an.

Von diesem Zeitpunkt an sind die zuvor beschriebenen ersten Verformungsbedingungen VB1 des Energiespeichers abgeschlossen, bei welchen sich der Energiespeicher mit einer ersten Steifigkeitszunahme FS1 verformt, und es folgen zweite Verformungsbedingungen VB2, bei welchen sich der Energiespeicher gemäß einer zweiten Steifigkeitszunahme FS2 verformt. Bedingt durch die erfindungsgemäße Ausgestaltung der umfangsseitigen Begrenzungen der Ausnehmungen sowie der umfangsseitigen Endwindungen der Energiespeicher ist demnach eine im Wesentlichen zweistufige Federkennlinie realisierbar, mit besonders weichem Ansprechverhalten bei geringen Relativdrehauslenkungen und mit vergleichsweise höherer Federsteifigkeit bei größeren Relativdrehauslenkungen.

Mit Vorzug wird der jeweilige Energiespeicher ohne wesentliche Vorspannung in die zugeordnete Ausnehmung eingesetzt, damit bei sehr kleinen Relativdrehauslenkungen zwischen den Übertragungselementen, insbesondere bei einem Übergang zwischen Zug und Schub, nicht zunächst eine Vorspannung überwunden werden muß, um danach erst die Elastizität der Energiespeicher nutzen zu können. Statt dessen können die Energiespeicher derart in die Ausnehmungen eingesetzt sein, dass in Umfangsrichtung ein Freiwinkel in beiden Auslenkrichtungen zur Verfügung stehen kann, der vorteilhafterweise etwa 0,5° betragen kann.

Eine sinnvolle Kombination der bislang behandelten Maßnahmen liegt vor, wenn gleichzeitig an der radialen Außenseite der jeweiligen Ausnehmung für einen Energiespeicher eine Freistellung vorgesehen ist, die einen Kontakt von Windungen des Energiespeichers mit der radialen Außenseite und damit eine unerwünschte Reibwirkung verhindert. Mit Vorzug ist diese Freistellung durch eine Krümmung der radialen Außenseite der Ausnehmung mit einem Freistellungsradius r_{FR} um eine Drehachse D3 hervorgerufen, der gegenüber einem Außenradius rₐ einer zum Vergleich herangezogenen, freistellungsfreien radialen Außenseite der Ausnehmung um eine Drehachse D2 erheblich kleiner ist. Somit wird im umfangsseitig mittleren Bereich des Energiespeichers ein größerer Eindringraum für dessen Windungen innerhalb der Ausnehmung bereitgestellt als im Bereich der umfangsseitigen Endwindungen, die üblicherweise einer sehr viel geringeren fliehkraftbedingten Radialauslenkung unterworfen sind als die Windungen im umfangsseitig mittleren Bereich. Aufgrund einer derartigen Ausgestaltung wird radial außen für den Energiespeicher ein Freiraum geschaffen, ohne die Ausnehmung in Radialrichtung deutlich zu vergrößern. Dadurch wird eine unnötige Materialschwächung der Übertragungselemente vermieden. Selbstverständlich wirkt sich bei der radialen Dimensionierung der Ausnehmungen insbesondere in deren radialen Außenbereich vorteilhaft aus, dass die Energiespeicher aufgrund ihrer erfindungsgemäßen Einspannung zwischen den beiden umfangsseitigen Begrenzungen unter der Wirkung der bereits erläuterten Stabilisierungskraft nur begrenzt nach radial außen durchgebogen werden.

Die Erfindung ist nachfolgend anhand eines Ausführungsbeispieles behandelt. Es zeigt:
- Fig. 1: die obere Hälfte eines Längsschnittes durch eine hydrodynamische Kopplungsanordnung mit einem Kolben einer Überbrückungskupplung und einem der letztgenannten zugeordneten Torsionsschwingungsdämpfer;
- Fig. 2: eine Draufsicht auf den Torsionsschwingungsdämpfer mit Blickrichtung A in Fig. 1 mit umfangsseitigen Endwindungen von Energiespeichern des Torsionsschwingungsdämpfers, die im radial äußeren Bereich von umfangsseitigen Begrenzungen von Ausnehmungen für die Energiespeicher zur Anlage kommen;
- Fig. 3: wie Fig. 2, aber mit umfangsseitigen Endwindungen der Energiespeicher des Torsionsschwingungsdämpfers, die im radial inneren Bereich der umfangsseitigen Begrenzungen der Ausnehmungen zur Anlage kommen;
- Fig. 4: eine zeichnerische Darstellung der Steifigkeitszunahme am Torsionsschwingungsdämpfer in Abhängigkeit von der Relativdrehauslenkung der Übertragungselemente;
- Fig. 5: eine Darstellung des neutralen Federradius r_{FN} in Bezug zum mittleren Radius rₘ der Ausnehmung bei Ausbildung der letztgenannten gemäß Fig. 2 ;
- Fig. 6: wie Fig. 5, aber mit Ausbildung der Ausnehmung gemäß Fig. 3.

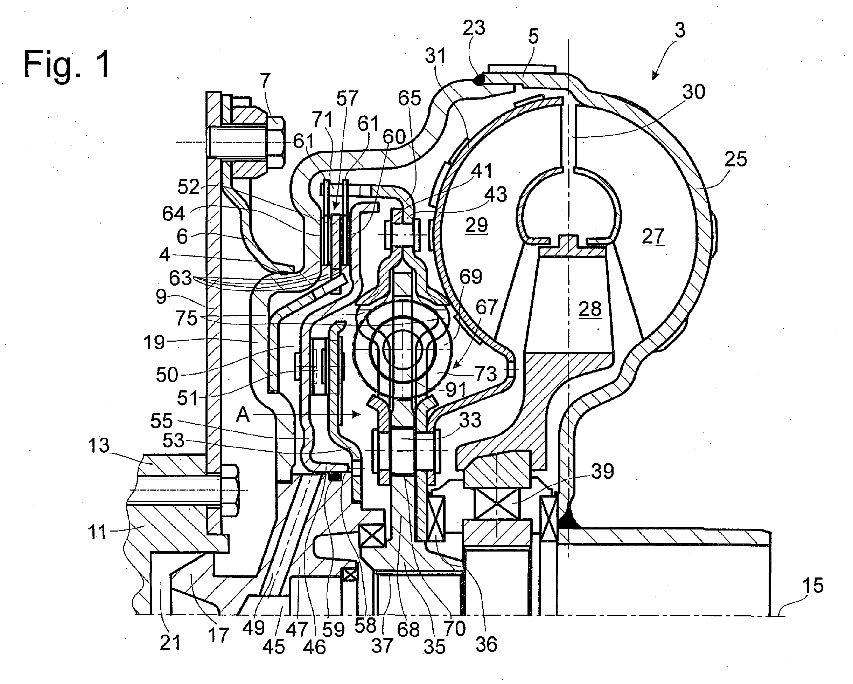

Die in Fig. 1 gezeigte hydrodynamische Kopplungsvorrichtung 3 weist ein Kupplungsgehäuse 5 auf, an welchem mittels einer Schweißnaht 4 eine Anbindungsplatte 6 befestigt ist, die über eine Mehrzahl von Aufnahmeelementen 7 und ein Kopplungselement 9, wie z. B. eine Flexplatte, mit einem Antrieb 11, beispielsweise der Kurbelwelle 13 einer Brennkraftmaschine, zur gemeinsamen Drehung gekoppelt werden kann.

Die Kopplungsvorrichtung 3 weist weiterhin im Bereich einer Drehachse 15 einen Lagerzapfen 17 auf, der an einem Deckel 19 des Gehäuses 5 vorgesehen und in einer am Antrieb 11 vorgesehenen Zentrierführung 21 aufgenommen ist.

Der Deckel 19 ist über eine Schweißnaht 23 mit einer Pumpenradschale 25 eines Pumpenrades 27 fest verbunden, das unter Bildung eines hydrodynamischen Kreises 30 mit einem Turbinenrad 29 sowie mit einem Leitrad 28 zusammenwirkt. Das Turbinenrad 29 verfügt über eine Turbinenradschale 31, die gegenüber einer Turbinennabe 35 zentriert ist, die über eine Axiallagerung 36 an einem Freilauf 39 des Leitrades 28 in Anlage kommt. Die Turbinennabe 35 steht über eine Verzahnung 37 mit einer radial innerhalb der Turbinennabe angeordneten, nicht gezeigten Getriebeeingangswelle in Drehverbindung. Üblicherweise sind derartige Getriebeeingangswellen mit einer Mittenbohrung ausgebildet, die in einen Übergangsraum 45 mündet, der mittels Durchgangsöffnungen 49 in einer Gehäusenabe 47 mit einer Druckkammer 50 verbunden ist, die axial zwischen dem Deckel 19 und einem Kolben 55 der Überbrückungskupplung 57 vorgesehen ist. Dem Kolben 55 ist ein Kolbenträger 53 zugeordnet, der mittels Tangentialblattfedern 51 zur Herstellung einer drehfesten Verbindung zwischen Kolben 55 und Deckel 19 der Gehäusenabe 47 befestigt ist.

Der Kolben 55 ist mit einem radial innen angeformten Kolbenfuß 56 an einer Aufnahme 58 der Gehäusenabe 47 mittels einer Abdichtung 59 dichtend aufgenommen und kommt in seinem radial äußeren Bereich mit einer Reibfläche 60 an einem Reibbelag 63 einer Lamelle 61 zur Anlage, wobei diese Lamelle 61 sich mittels eines weiteren Reibbelages 63, einer Zwischenlamelle 52 und einer weiteren Lamelle 61 mit beidseitigen Reibbelägen 63 an einer Reibfläche 64 des Deckels 19 abzustützen vermag. Die Lamellen 61 sind jeweils mit einer Verzahnung 71 eines antriebsseitigen Übertragungselementes 65 eines Torsionsschwingungsdämpfers 67 in drehfester Verbindung, wobei dieses antriebsseitige Übertragungselement 65, gebildet durch Deckbleche 41 und 43, über eine Vernietung 33 an der Turbinenradschale 31 befestigt ist. Das antriebsseitige Übertragungselement 65 stützt sich über einen Umfangsfedersatz 69 an einem abtriebsseitigen Übertragungselement 68 des Torsionsschwingungsdämpfers 67, in der konkreten Ausführung gebildet durch die Turbinennabe 35, ab. Eine Begrenzung der Relativdrehauslenkweite zwischen antriebsseitigem Übertragungselement 65 und abtriebsseitigem Übertragungselement 68 erfolgt durch die Vernietung 33, die mit vorbestimmtem Umfangsspiel in zugeordnete Aussparungen 70 eingreift.

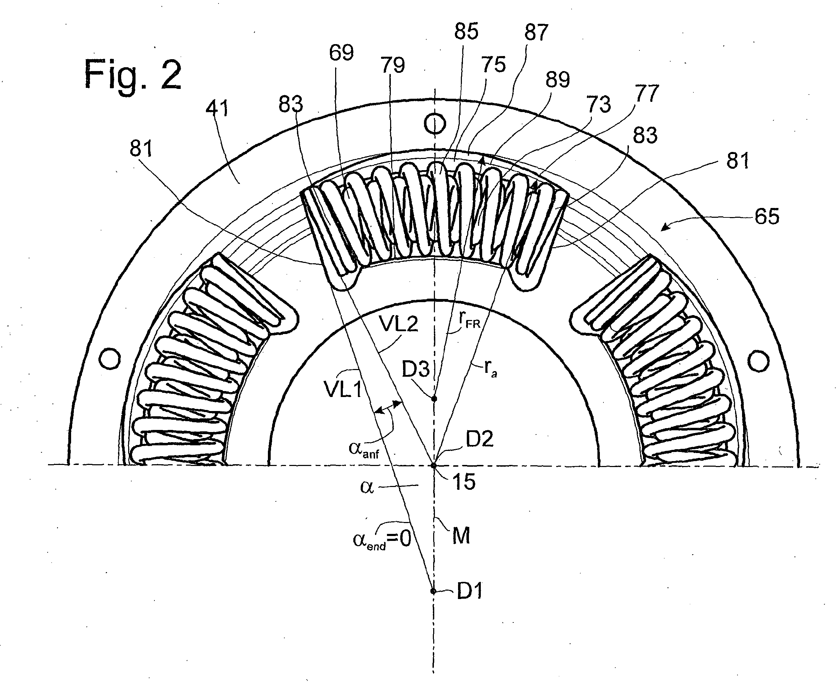

Fig. 2 zeigt das dem Kolben 55 der Überbrückungskupplung 57 zugewandte Deckblech 41 des antriebseitigen Übertragungselementes 65 des Torsionsschwingungsdämpfers 67, wobei in Ausnehmungen 70 des Deckbleches 41 aufgenommene Energiespeicher 73 des Umfangsfedersatzes 69 ebenso auch in den dem Turbinenrad 29 zugewandten Deckblech 43 enthalten sind. Jeder der in den Ausnehmungen 75 aufgenommene Energiespeicher 73 steht außerdem in Wirkverbindung mit am abtriebsseitigen Übertragungselement 68, mithin also an der Turbinennabe 35 vorgesehenen, sich nach radial außen erstreckenden Ansteuerelementen 91 (Fig. 1).

Wie Fig. 2 deutlich entnommen werden kann, besteht jede Ausnehmung 75 aus einer radialen Außenseite 77 sowie einer radialen Innenseite 79, durch welche jeweils zwei umfangsseitige Begrenzungen 81 miteinander verbunden sind. Der jeweils in der Ausnehmung 75 angeordnete Energiespeicher 73 verfügt über umfangsseitige Endwindungen 83, von denen jede jeweils einer umfangsseitigen Begrenzung 81 der Ausnehmung 75 zugewandt ist, sowie über eine Mehrzahl umfangsseitig mittlerer Windungen 85, jeweils vorgesehen zwischen den beiden umfangsseitigen Endwindungen 83. In Fig. 2 ist der Zustand der Energiespeicher 73 innerhalb der jeweiligen Ausnehmung 75 bei Drehauslenkungsfreiheit zwischen den beiden Übertragungselementen 65 und 68 des Torsionsschwingungsdämpfers 67 dargestellt. Die einzelnen Energiespeicher 73 sind ohne Vorspannung in die jeweilige Ausnehmung 75 eingesetzt und können sogar mit einem geringen, vorbestimmten Freiwinkel gegenüber den umfangsseitigen Begrenzungen 81 der Ausnehmungen 75 versehen sein.

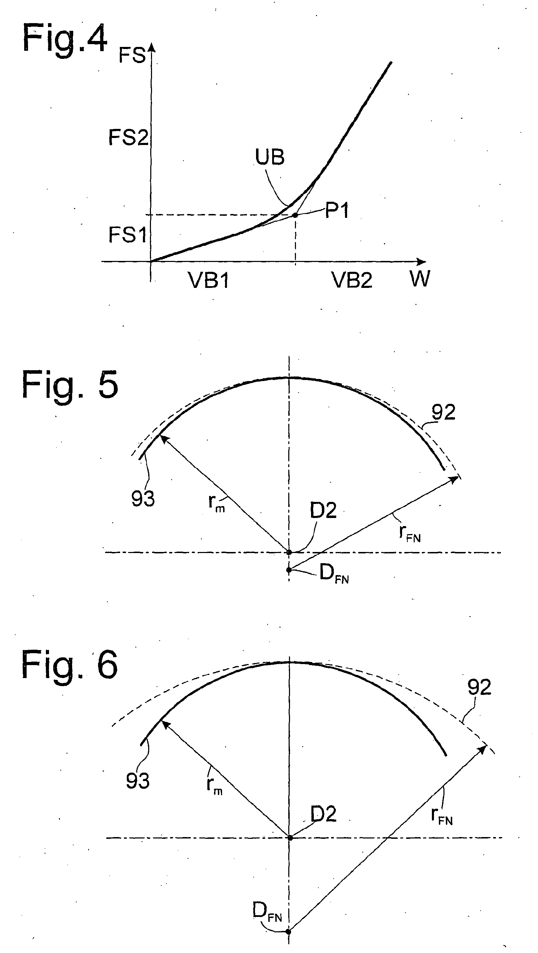

Was die Energiespeicher 73 anbelangt, so sind diese bereits vorgekrümmt ausgebildet und weisen eine ihrer Krümmung entsprechende Energiespeicher-Mittellinie 92 auf, die in der der Fig. 2 zugeordneten Fig. 5 durch strichlinierte Darstellung zeichnerisch herausgestellt ist. Die Energiespeicher-Mittellinie 92 erstreckt sich um eine virtuelle Drehachse D_{FN} mit einem neutralen Energiespeicherradius r_{FN}. Fig. 5 zeigt weiterhin eine den Ausnehmungen 75 zugeordnete Ausnehmungs-Mittellinie 93, die in unterbrechungsfreier Linienführung eingezeichnet ist und um eine Drehachse D2 mit einem mittleren Ausnehmungsradius rₘ verläuft. Bei der Ausführung nach Fig. 2 ist die neutrale Energiespeicher-Mittellinie 92 mit ihrem neutralen Energiespeicherradius r_{FN} um die Drehachse D_{FN} nur unwesentlich größer als die Ausnehmungs-Mittellinie 93 mit dem mittleren Ausnehmungsradius rₘ um die Drehachse D2. Ebenso ist denkbar, die Energiespeicher-Mittellinie 92 identisch mit der Ausnehmungs-Mittellinie 93 auszubilden.

Zurückkommend auf Fig. 2, zeigt diese, dass die bereits erwähnte Drehachse D2 mit der Drehachse 15 des Kupplungsgehäuses zusammenfallen kann. Darüber hinaus ist in Fig. 2 eine weitere Drehachse D1 enthalten, die durch eine von der umfangsseitigen Begrenzung 81 der Ausnehmung 75 ausgehende Verbindungslinie VL1 nach radial innen verlängert wird, bis sie mit einer Mittenachse M der jeweiligen Ausnehmung 75 schneidet. Eine zweite Verbindungslinie VL2 entsteht durch Verlängerung der umfangsseitigen Endwindung 83 des Energiespeichers 73 nach radial innen, bis diese Verbindungslinie VL2 die bereits erwähnte Mittellinie M der Ausnehmung 75 schneidet. Aufgrund dieser geometrischen Ausbildung von Energiespeicher 73 und Ausnehmung 75 besteht zwischen den beiden Verbindungslinien VL1 und VL2 ein Anfangsanstellwinkel α_{anf}, durch welchen bewirkt wird, dass die umfangsseitige Endwindung 83 des Energiespeichers 73 bei Relativdrehauslenkungsfreiheit der Übertragungselemente 65, 68 lediglich im radial äußeren Bereich an der benachbarten umfangsseitigen Begrenzung 81 der Ausnehmung 75 zur Anlage kommt. Sobald nun zwischen den Übertragungselementen 65 und 68 des Torsionsschwingungsdämpfers 67 eine Relativdrehauslenkung eintritt, wird auf den Energiespeicher 73 über dessen umfangsseitige Endwindung 83 eine Kraft ausgeübt, die am Energiespeicher 73 eine nach radial innen gerichtete Stabilisierungskraft erzeugt, so dass der Energiespeicher 73 auch unter Fliehkraft insbesondere mit seinen umfangsseitig mittleren Windungen 85 nicht in Anlage an der radialen Außenseite 77 der Ausnehmung 75 gelangt.

Eine zunehmende Relativdrehauslenkung der beiden Übertragungselemente 65 und 68 zueinander bewirkt, dass der Energiespeicher 73 mit seiner umfangsseitigen Endwindung 83 immer stärker gegen die umfangsseitige Begrenzung 81 der Ausnehmung 75 gepresst wird, und sich dadurch, beginnend von radial außen, mit einem immer größer werdenden Radialabschnitt an der zugeordneten umfangsseitigen Begrenzung 81 anlagert. Dadurch wird der Anstellwinkel α zwischen den Verbindungslinien VL1 und VL2, beginnend vom Anfangsanstellwinkel α_{anf} beständig kleiner, bis er ab einer vorbestimmten Grenzrelativdrehauslenkung zwischen den Übertragungselementen 65 und 68 auf den Wert 0 abgesenkt ist. Wie Fig. 2 zeigt, würde bei Erreichen der Grenzrelativdrehauslenkung die Verbindungslinie VL2 mit der Verbindungslinie VL1 zusammenfallen, der Winkel α ist zu einem Endanstellwinkel α_{end} geworden, wobei α_{end} den Betrag "Null" annimmt.

Bei über die vorbestimmte Grenzrelativdrehauslenkung hinausgehender Relativdrehauslenkung der Übertragungselemente 65, 68 liegt stets die umfangsseitige Endwindung 83 jedes Energiespeichers 73 vollflächig an der benachbarten umfangsseitigen Begrenzung 81 der Ausnehmung 75 an.

Fig. 4 zeigt, in welcher Weise der Vorgang zwischen der umfangsseitigen Endwindung 83 des Energiespeichers 73 und der umfangsseitigen Begrenzung 81 der Ausnehmung 75 sich auf die Federkennlinie des Torsionsschwingungsdämpfers 67 auswirkt. In Fig. 4 ist die Federsteifigkeit FS über den Federweg W eingezeichnet. In einem ersten Verformungsbereich VB1 nimmt die Federsteifigkeit FS1 progressiv zu, bis ein Endpunkt P1 erreicht ist. Dieser erste Verformungsbereich VB1 des Energiespeichers entspricht dem Verhalten der umfangsseitigen Endwindung 83 gegenüber der umfangsseitigen Begrenzung 81 beim Durchlaufen des Winkels α zwischen α_{anf} und α_{end} .Sobald mit Erreichen der Grenzrelativdrehauslenkung an den Übertragungselementen 65, 68 die umfangsseitige Endwindung 83 vollflächig an der umfangsseitigen Begrenzung 81 zur Anlage gekommen ist, beginnt der zweite Verformungsbereich VB2 mit der Federsteifigkeit FS2, die nun eine übliche Federkennlinie zeigt. Es bleibt allerdings hinzuzufügen, dass gemäß Fig. 4 der Übergang zwischen den beiden Verformungsbereichen VB1 und VB2 am Punkt P1 nicht schlagartig vollzogen wird, sondern in Form eines zeichnerisch dargestellten, "kontinuierlichen" Übergangsbereiches UB zwischen den beiden Federsteifigkeiten FS1 und FS2.

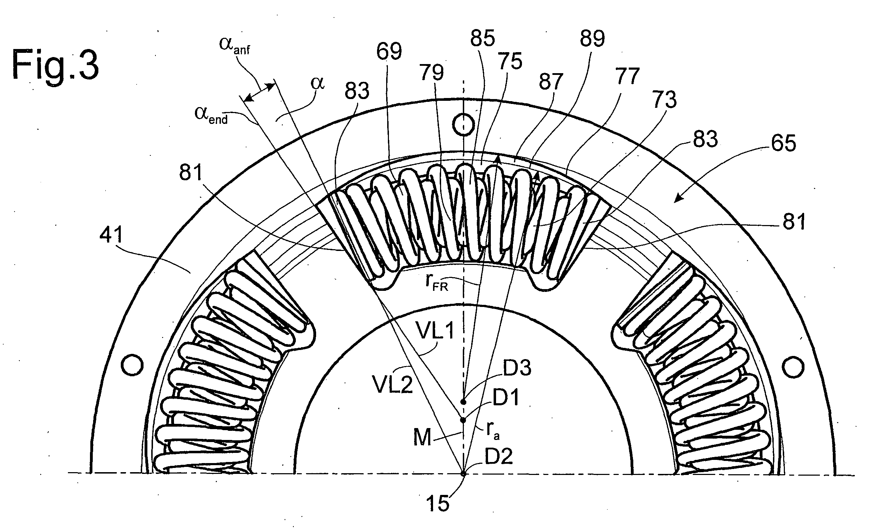

Die Ausführung gemäß Fig. 3 unterscheidet sich von derjenigen nach Fig. 2 durch den Verlauf der umfangsseitigen Begrenzungen 81 der jeweiligen Ausnehmung 75. Die in Verlängerung der jeweiligen umfangsseitigen Begrenzung 81 die Mittenachse M der Ausnehmung 75 schneidende Verbindungslinie VL1 ist gegenüber der den umfangsseitigen Endwindungen 83 der Energiespeicher 73 zugeordneten Verbindungslinie VL2 derart ausgerichtet, dass die jeweilige umfangsseitige Endwindung 83, fehlende Relativdrehauslenkung der Übertragungselemente 65, 68 vorausgesetzt, lediglich im radial inneren Bereich an der benachbarten umfangsseitigen Begrenzung 81 zur Anlage kommt. Wie bereits bei Fig. 2 erläutert, liegt in diesem Betriebszustand ein Anstellwinkel α vor, der bei Beginn einer Relativdrehauslenkung zwischen den Übertragungselementen 65, 68, ausgehend von einem Anfangsanstellwinkel α_{anf}, immer weiter reduziert wird, bis schließlich bei Erreichen der vorbestimmten Grenzrelativdrehauslenkung der Endanstellwinkel α_{end} eingenommen ist, bei welchem, sofern dieser den Betrag "Null" annimmt, die jeweils umfangsseitige Endwindung 83 vollflächig an der zugeordneten umfangsseitigen Begrenzung 81 in Anlage gekommen ist. Im Bereich des Anstellwinkels α zwischen α_{anf} und α_{end} nimmt, wie anhand von Fig. 2 bereits ausführlich beschrieben, die Anlagefläche der Endwindungen 83 des Energiespeichers 73 an der benachbarten umfangsseitigen Begrenzung 81 der Ausnehmung 75 mit anwachsender Relativdrehauslenkung der Übertragungselemente 65, 68 zu, und zwar bei Fig. 3 von radial innen ausgehend nach radial außen. Auch die Federkennlinie entspricht der Darstellung in Fig. 4.

Um auch bei der Ausführung gemäß Fig. 3 eine der Fliehkraft entgegenwirkende Stabilisierungskraft insbesondere an den umfangsseitig mittleren Windungen 85 der Energiespeicher 73 zu erhalten, sind die letztgenannten gemäß Fig. 6 mit einem neutralen Energiespeicherradius r_{FN} um eine Drehachse D_{FN} ausgebildet, der deutlich größer als der mittlere Ausnehmungsradius rₘ um die Drehachse D2 ist. Im Vergleich zur Ausführung gemäß Fig. 2 sind die Energiespeicher 73 in Fig. 3 somit weniger stark gekrümmt und verfügen demnach über einen größeren neutralen Energiespeicherradius r_{FN} um die Drehachse D_{FN}. Aufgrund seiner vergleichsweise geringen Krümmung versucht sich der jeweilige Energiespeicher 73 in der jeweiligen, stärker gekrümmten Ausnehmung 75 auszurichten, wobei der Energiespeicher 73 versucht, mit seinen umfangsseitigen Endwindungen 83 im radial inneren Bereich dichter an die jeweilige umfangsseitige Begrenzung 81 heranzurücken, als dies bei stärkerer Krümmung der Fall wäre. In Kombination mit der Ausführung der umfangsseitigen Begrenzung 81 gemäß Fig. 3 wird der Energiespeicher 73 demnach im Wirkungsbereich des Anstellwinkels α im Wesentlichen radial innen belastet, wodurch das Bestreben des Energiespeichers 73, sich innerhalb der Ausnehmung 75 auszurichten, unterstützt wird. Aufgrund des Zusammenhanges der Verbindungslinien VL1 und VL2 gemäß Fig. 3 sowie der Radienverhältnisse r_{FN} und rₘ in Fig. 6 entsteht bei Ansteuerung des Energiespeichers 73 die gewünschte, der Fliehkraft entgegenwirkende Stabilisierungskraft.

Sowohl die Ausführung nach Fig. 2 als auch diejenige nach Fig. 3 kann jeweils im Bereich der radialen Außenseite 77 jeder Ausnehmung 75 mit einer Freistellung 87 versehen sein, wobei die letztgenannte insbesondere im umfangsseitig mittleren Bereich der radialen Außenseite 77 einen größeren Eindringraum für die umfangsseitig mittleren Windungen 85 des jeweiligen Energiespeichers 73 bereitstellt. Eine derartige Ausgestaltung der radialen Außenseite 77 ist insbesondere deshalb von Vorteil, weil gerade die umfangsseitig mittleren Windungen 85 eine vergleichsweise starke Radialauslenkung unter Fliehkraft in Richtung zur radialen Außenseite 77 erfahren. Obwohl diese Radialauslenkung durch die zuvor erwähnte Stabilisierungskraft begrenzt wird, soll durch die Freistellung 87 auf jeden Fall ein Kontakt einzelner Windungen, insbesondere der umfangsseitig mittleren Windungen 85, mit der zugeordneten radialen Außenseite 77 der Ausnehmung 75 vermieden werden. Mit Vorzug ist die Freistellung 87 durch einen Freistellungsradius r_{FR} um eine Drehachse D3 gebildet, wobei dieser Freistellungsradius r_{FR} kleiner ist als ein Außenradius rₐ um die Drehachse D2, wobei der Außenradius rₐ die radiale Außenseite 77 ohne Freistellung 87 beschreiben würde. Die dem Außenradius rₐ zugeordnete, freistellungsfreie radiale Außenseite ist in den Fig. 2 und 3 mit einer Hilfslinie eingezeichnet und mit der Bezugsziffer 89 versehen.

Die Freistellung 87 in der jeweiligen Ausnehmung 75 ist gemäß den Fig. 2 oder 3 stets in Verbindung mit den Maßnahmen zur Erzeugung einer der Fliehkraft entgegenwirkenden Stabilisierungskraft eingezeichnet, kann allerdings ebenso ohne diese Maßnahmen Verwendung finden, da sie eine Vergrößerung des Abstandes zwischen den Windungen der Energiespeicher 73, hierbei insbesondere zwischen den umfangsseitig mittleren Windungen 85 und der jeweiligen radialen Außenseite 77 der Ausnehmungen 75, gegenüber einer freistellungsfreien radialen Außenseite 89 bewirkt und damit eine durch Fliehkraft ausgelöste Reibwirkung zwischen den Windungen der Energiespeicher 73 und der radialen Außenseite 77 der Ausnehmung 75 zumindest reduziert.

### Bezugszeichenliste

- 3.: hydrodyn. Kopplungsvorrichtung
- 4.: Schweißnaht
- 5.: Kupplungsgehäuse
- 6.: Anbindungsplatte
- 7.: Aufnahmeelemente
- 9.: Kopplungselement
- 11.: Antrieb
- 13.: Kurbelwelle
- 15.: Drehachse
- 17.: Lagerzapfen
- 19.: Deckel
- 21.: Zentrierführung
- 23.: Schweißnaht
- 25.: Pumpenradschale
- 27.: Pumpenrad
- 28.: Leitrad
- 29.: Turbinenrad
- 30.: hydrod. Kreis
- 31.: Turbinenradschale
- 33.: Vernietung
- 35.: Turbinennabe
- 36.: Axiallagerung
- 37.: Verzahnung
- 39.: Freilauf
- 41.: Deckblech
- 43.: Deckblech
- 45.: Übergangsraum
- 47.: Gehäusenabe
- 49.: Durchgangsöffnungen
- 50.: Druckkammer
- 51.: Tangentialblattfedern
- 52.: Zwischenlamelle
- 53.: Kolbenträger
- 55.: Kolben
- 56.: Kolbenfuß
- 57.: Überbrückungskupplung
- 58.: Aufnahme
- 59.: Abdichtung
- 60.: Reibfläche
- 61.: Lamelle
- 63.: Reibbelag
- 64.: Reibfläche
- 65.: antriebsseitiges Übertragungselement
- 67.: Torsionsschwingungsdämpfer
- 68.: abtriebsseitiges Übertragungselement
- 69.: Umfangsfedersatz
- 70.: Aussparungen
- 71.: Verzahnung
- 73.: Energiespeicher
- 75.: Ausnehmung
- 77.: radiale Außenseite
- 79.: radiale Innenseite
- 81.: umfangsseitige Begrenzung
- 83.: umfangsseitige Endwindung
- 85.: umfangsseitig mittlere Windung
- 87.: Freistellung
- 89.: freistellungsfreie radiale Außenseite
- 91.: Ansteuerelemente
- 92.: Energiespeicher-Mittellinie
- 93.: Ausnehmungs-Mittellinie

## Patentansprüche

1. Torsionsschwingungsdämpfer für eine Überbrückungskupplung einer hydrodynamischen Kopplungsanordnung mit einem antriebsseitigen Übertragungselement und einem relativ hierzu gegen die Wirkung von Energiespeichern um einen Relativdrehwinkel auslenkbaren abtriebsseitigen Übertragungselement, wobei die Übertragungselemente Ausnehmungen zur Aufnahme jeweils eines Energiespeichers aufweisen, der über seine jeweiligen umfangsseitigen Endwindungen an je einer umfangsseitigen Begrenzung der Ausnehmung abstützbar ist,
**dadurch gekennzeichnet, dass**
• die umfangsseitigen Begrenzungen (81) jeder Ausnehmung (75) entlang je einer ersten Verbindungslinie (VL1) zu einer ersten Drehachse (D1) im Wesentlichen auf dieselbe ausgerichtet sind,
• die umfangsseitigen Endwindungen (83) jedes Energiespeichers (73) bei fehlender Relativdrehauslenkung der Übertragungselemente (65, 68) entlang je einer zweiten Verbindungslinie (VL2) zu einer zweiten Drehachse (D2) im Wesentlichen auf dieselbe ausgerichtet sind,
• die zweite Verbindungslinie (VL2) unter einem Anfangsanstellwinkel (α_{anf}) gegenüber der ersten Verbindungslinie (VL1) ausgerichtet ist,
• mit Beginn einer Relativdrehauslenkung der Übertragungselemente (65, 68) bis zum Erreichen einer vorbestimmten Grenzrelativdrehauslenkung zwischen diesen an der jeweiligen umfangsseitigen Endwindung (83) jedes Energiespeichers (73) eine Änderung eines Anstellwinkels (α), ausgehend vom Anfangsanstellwinkel (α_{anf}), auf einen ebenfalls zwischen der zweiten Verbindungslinie (VL2) und der ersten Verbindungslinie (VL1) liegenden Endanstellwinkel (α_{end}) einsetzt, und
• bei einer über die vorbestimmte Grenzrelativdrehauslenkung hinaus gehenden Relativdrehauslenkung der Übertragungselemente (65, 68) die umfangsseitigen Endwindungen (83) jedes Energiespeichers (73) zumindest im Wesentlichen keiner weiteren Änderung des Anstellwinkels (α) unterworfen sind.

2. Torsionsschwingungsdämpfer nach Anspruch 1,
**dadurch gekennzeichnet,**
**dass** der Anfangsanstellwinkel (α_{anf}) betragsmäßig größer als der Endanstellwinkel (α_{end}) ist.

3. Torsionsschwingungsdämpfer nach Anspruch 1 oder 2,
**dadurch gekennzeichnet,**
**dass** der Anfangsanstellwinkel (α_{anf}) betragsmäßig größer Null und der Endanstellwinkel (α_{end}) im Wesentlichen gleich Null ist.

4. Torsionsschwingungsdämpfer nach einem der Ansprüche 1 bis 3,
**dadurch gekennzeichnet,**
**dass** die umfangsseitigen Endwindungen (83) des jeweiligen Energiespeichers (73) bei fehlender Relativdrehauslenkung der Übertragungselemente (65, 68) nur mit ihren radial äußeren Bereichen an der jeweils zugeordneten umfangsseitigen Begrenzung (81) in Anlage stehen, und erst bei Erreichen der Grenzrelativposition der Übertragungselemente (65, 68) über ihre gesamte radiale Erstreckungsweite in Anlage gelangen.

5. Torsionsschwingungsdämpfer nach einem der Ansprüche 1 bis 3,
**dadurch gekennzeichnet,**
**dass** die umfangsseitigen Endwindungen (83) des jeweiligen Energiespeichers (73) bei fehlender Relativdrehauslenkung der Übertragungselemente (65, 68) nur mit ihren radial inneren Bereichen an der jeweils zugeordneten umfangsseitigen Begrenzung (81) in Anlage stehen, und erst bei Erreichen der Grenzrelativposition der Übertragungselemente (65, 68) über ihre gesamte radiale Erstreckungsweite in Anlage gelangen.

6. Torsionsschwingungsdämpfer nach einem der Ansprüche 1 bis 5,
**dadurch gekennzeichnet,**
**dass** die Energiespeicher (73) mit Vorkrümmung ausgebildet sind.

7. Torsionsschwingungsdämpfer nach einem der Ansprüche 1 bis 4 und 6,
**dadurch gekennzeichnet,**
**dass** die Energiespeicher (73) mit einer Vorkrümmung ausgebildet sind, bei welcher der jeweilige neutrale Energiespeicherradius (r_{FN}) nur geringfügig größer oder im Wesentlichen gleich ist wie der mittlere Ausnehmungsradius (rₘ) der Ausnehmung (75).

8. Torsionsschwingungsdämpfer nach einem der Ansprüche 1 bis 3 und 5, 6,
**dadurch gekennzeichnet,**
**dass** die Energiespeicher (73) jeweils mit einer Vorkrümmung ausgebildet sind, bei welcher der jeweilige neutrale Energiespeicherradius (r_{FN}) deutlich größer als der mittlere Ausnehmungsradius (rₘ) ist.

9. Torsionsschwingungsdämpfer nach einem der Ansprüche 1 bis 8,
**dadurch gekennzeichnet,**
**dass** die Energiespeicher (73) jeweils im Wesentlichen ohne Vorspannung in die jeweilige Ausnehmung (75) eingesetzt sind.

10. Torsionsschwingungsdämpfer nach einem der Ansprüche 1 bis 9,
**dadurch gekennzeichnet,**
**dass** die Energiespeicher (73) zur Gewährleistung eines vorbestimmten geringen Freiwinkels jeweils mit Spiel in Umfangsrichtung in die jeweilige Ausnehmung (75) eingesetzt sind.

11. Torsionsschwingungsdämpfer nach einem der Ansprüche 1 bis 10,
**dadurch gekennzeichnet,**
**dass** die Ausnehmungen (75) an ihren jeweiligen radialen Außenseiten (77) jeweils mit einer Freistellung (87) zur Bereitstellung eines radialen Eindringraumes für Windungen (85) der Energiespeicher (73) im Wesentlichen im umfangsseitig mittleren Bereich der Letztgenannten versehen sind.

12. Torsionsschwingungsdämpfer nach Anspruch 11,
**dadurch gekennzeichnet,**
**dass** die radiale Außenseite (77) der jeweiligen Ausnehmung (75) zur Bildung der Freistellung (87) als Kreissegment mit einem Freistellungsradius (r_{FR}) um eine dritte Drehachse (D3) ausgebildet ist, der kleiner ist als ein Außenradius (rₐ) zwischen einer freistellungsfreien radialen Außenseite (89) der Ausnehmung (75) und der ersten Drehachse (D1).

13. Torsionsschwingungsdämpfer nach einem der Ansprüche 1 bis 12,
**dadurch gekennzeichnet,**
**dass** die zweite Drehachse (D2) im Wesentlichen mit der Drehachse (15) des Kupplungsgehäuses (15) überein stimmt, während die erste Drehachse (D1) oder die dritte Drehachse (D3) jeweils virtuelle Drehachsen darstellen.

14. Torsionsschwingungsdämpfer für eine Überbrückungskupplung einer hydrodynamischen Kopplungsanordnung mit einem antriebsseitigen Übertragungselement und einem relativ hierzu gegen die Wirkung von Energiespeichern um einen Relativdrehwinkel auslenkbaren abtriebsseitigen Übertragungselement, wobei die Übertragungselemente gegenüber einer gemeinsamen Drehachse zentriert sind und Ausnehmungen zur Aufnahme jeweils eines Energiespeichers aufweisen, der über seine jeweiligen umfangsseitigen Endwindungen jeweils an einer von zwei durch je eine radiale Außenseite der Aufnahme voneinander getrennten umfangsseitigen Begrenzungen der Ausnehmung abstützbar ist,
**dadurch gekennzeichnet,**
**dass** die Ausnehmungen (75) an ihren jeweiligen radialen Außenseiten (77) jeweils mit einer Freistellung (87) zur Bereitstellung eines radialen Eindringraumes für Windungen (85) des jeweiligen Energiespeichers (73) im Wesentlichen im umfangsseitig mittleren Bereich des Letztgenannten versehen sind.

15. Torsionsschwingungsdämpfer nach Anspruch 14,
**dadurch gekennzeichnet,**
**dass** die radiale Außenseite (77) der jeweiligen Ausnehmung (75) zur Bildung der Freistellung (87) als Kreissegment mit einem Radius (r_{FR}) um eine virtuelle Drehachse (D3) ausgebildet ist, der kleiner ist als ein Radius (rₐ) zwischen einer freistellungsfreien radialen Außenseite (89) der Ausnehmung (75) und der Drehachse (15) des Kupplungsgehäuses (5).
